# EUROPEAN PATENT SPECIFICATION

(11) **EP 3 273 512 B1**
(45) Date of publication and mention of the grant of the patent: **15.02.2023**
(21) Application number: 15885338.2
(22) Date of filing: 18.12.2015
(51) Int. Cl.: H01M 4/14, H01M 4/73, H01M 10/06, H01M 10/08

(54) **LEAD STORAGE CELL**
BLEIAKKUMULATOR
ACCUMULATEUR AU PLOMB

(30) Priority: 18.03.2015 JP 2015054123
(43) Date of publication of application: 24.01.2018
(73) Proprietor: GS Yuasa International Ltd., Kyoto-shi, Kyoto 601-8520 (JP)
(72) Inventor: ANDO, Kazunari, 431-0452 Shizuoka (JP); KIKUCHI, Takuya, 431-0452 Shizuoka (JP); OGASAWARA, Etsuko, 431-0452 Shizuoka (JP)
(74) Representative: Isarpatent
(86) International application number: PCT/JP2015/006315
(87) International publication number: WO 2016/147240

(56) References cited:
- WO-A1-2013/073420
- CN-A- 102 044 707
- JP-A- H06 310 120
- JP-A- 2008 146 960
- JP-A- 2014 241 306
- US-A1- 2013 071 735

## Description

### [Technical Field]

The present invention relates to a lead acid battery for car starter.

### [Background Art]

In the process of producing a lead acid battery, after production of electrode plate groups each including positive and negative electrode plates stacked alternately with a separator therebetween, current collecting tabs (ears) of the positive electrode plates are collectively integrated with a positive strap for each electrode plate group, and current collecting tabs (ears) of the negative electrode plates are collectively integrated with a negative strap for each electrode plate group. More specifically, while the positive and the negative strap is being formed, the strap is integrated with the current collecting tabs (ears)by, for example, abutting a piece of lead alloy to the current collecting tabs (ears) and then heating them with a burner, or dipping the current collecting tabs (ears) in a molten lead alloy and then cooling and solidifying them.

To increase the affinity between the positive and the negative strap and the current collecting tabs (ears) so that they can be integrated smoothly, Patent Literatures 1 and 2 teach to provide bismuth (lead-bismuth alloy) at the boundaries between the positive strap and the current collecting tabs (ears) and between the negative strap and the current collecting tabs (ears). In particular, providing bismuth (lead-bismuth alloy) at the boundary between the negative strap and the current collecting tabs (ears) as taught by Patent Literature 1, unlike providing tin (lead-tin alloy), can suppress the occurrence of electrical disconnection due to corrosion, even though the boundary has been exposed from the surface of electrolyte as the electrolyte decreases with repetition of charge and discharge. Patent Literatures 3 and 4 disclose prior-art lead acid batteries with a negative electrode grid.

### [Citation List]

### [Patent Literature]

[PTL 1]Japanese Laid-Open Patent Publication No. 2008-146960
[PTL 2]Japanese Laid-Open Patent Publication No. Hei 04-137357
[PTL 3]US 2013/071735 A1
[PTL 4]CN102044702

### [Summary of Invention]

### [Technical Problem]

It is sometimes observed, however, that providing bismuth, for example, at the boundary between the negative strap and the current collecting tabs (ears) as taught by Patent Literature 1 causes a different problem from the aforementioned problem of corrosion at the boundary, i.e., a reduction in charge acceptance. The present invention is made in view of the above, and aims to provide a highly reliable lead acid battery capable of suppressing the occurrence of reduction in charge acceptance and electrical disconnection due to corrosion that occur in association with decrease of electrolyte.

### [Solution to Problem]

The invention is defined by the appended claims.

A lead acid battery according to the present disclosure includes: positive electrode plates each including a positive electrode grid and a positive electrode active material, and negative electrode plates each including a negative electrode grid and a negative electrode active material, the positive electrode plate sand the negative electrode plates being stacked alternately with a separator between the positive electrode plate and the negative electrode plate to form an electrode plate group. The lead acid battery further includes: a positive strap integrated with current collecting tabs(ears) of the positive electrode plates collectively for each electrode plate group; a negative strap integrated with current collecting tabs(ears) of the negative electrode plates collectively for each electrode plate group; a battery container having a plurality of cell chambers each containing the electrode plate group and an electrolyte; and a cover sealing an opening of the battery container. A boundary layer containing bismuth is provided at a boundary between the current collecting tab (ear) of the negative electrode plate and the negative strap. The negative electrode grid comprises a lead-calcium-tin alloy containing tin in an amount of 0.45 mass% or less.

The boundary layer comprises a lead-bismuth alloy, and contains bismuth in an amount of 25 mass% or more and 50 mass% or less.

In a preferable embodiment, the electrolyte contains aluminum ion at a concentration of 0.02 mol/L or more and 0.2 mol/L or less.

### [Advantageous Effects of Invention]

According to the present invention, it is possible to provide a highly reliable lead acid battery capable of suppressing the occurrence of reduction in charge acceptance and electrical disconnection due to corrosion that occur in association with decrease of electrolyte.

### [Brief Description of Drawing]

[FIG. 1] A schematic overview of a lead acid battery of the present invention.
[FIG. 2] An exemplary view of an essential part of the lead acid battery of the present invention.
[FIG. 3] An exemplary view of another essential part of the lead acid battery of the present invention.

### [Description of Embodiments]

Embodiments of the present invention will be described below in detail with reference to drawings.

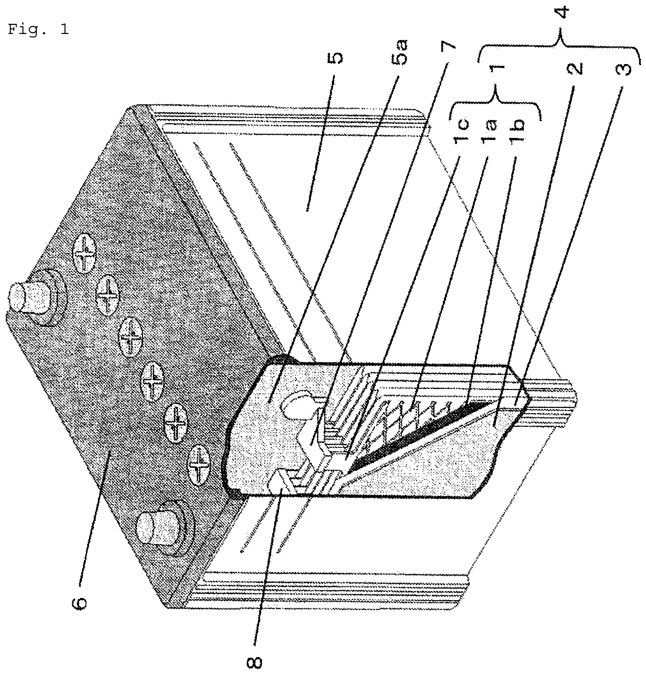

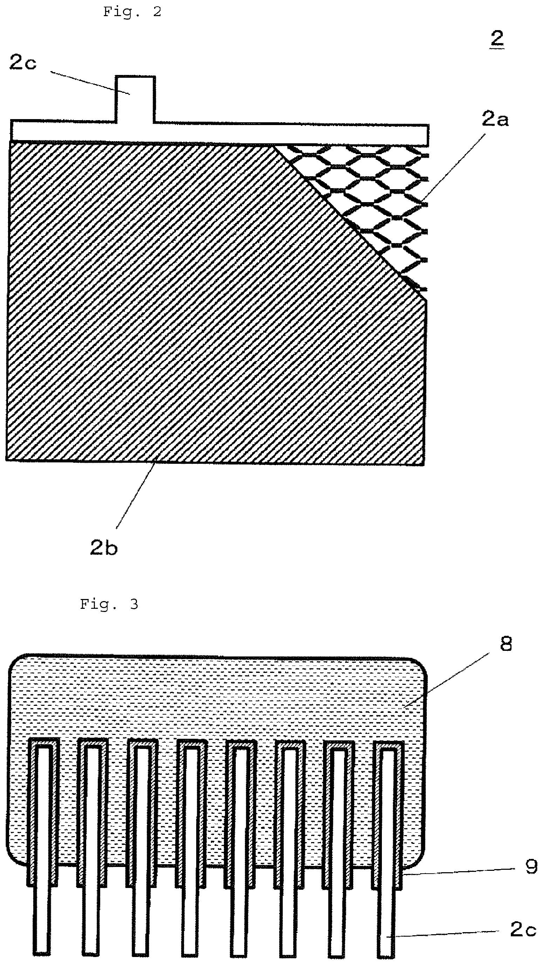

FIG. 1 is a schematic overview of a lead acid battery of the present invention. FIG. 2 is an exemplary view of a negative electrode plate, an essential part of the lead acid battery of the present invention. FIG. 3 is an exemplary view of a boundary between the current collecting tab (ear) of the negative electrode plate and the negative strap, another essential part of the lead acid battery of the present invention.

A plurality of electrode plate groups 4 each including positive electrode plates 1 and negative electrode plates 2 stacked alternately one on another with a separator 3 therebetween is placed in a battery container 5 having a plurality of cell chambers 5a, together with an electrolyte (not shown). Current collecting tabs (ears) 1c, each serving as a current collecting portion projecting from the positive electrode plate 1 having an approximate rectangular outline when viewed from the front are collectively integrated with a positive strap 7for each electrode plate group 4. Current collecting tabs (ears) 2c, each serving as a current collecting portion projecting from the negative electrode plate 2 having an approximate rectangular outline when viewed from the front are collectively integrated with a negative strap 8for each electrode plate group 4. The opening of the battery container 5 is sealed with a cover 6. Here, the positive electrode plate 1 includes a positive electrode grid 1a and a positive electrode active material 1b, and the negative electrode plate 2 includes a negative electrode grid 2aand a negative electrode active material 2b.

The present invention includes two features. The first is that a boundary layer 9 containing bismuth is provided at the boundary between the current collecting tab (ear) 2c of the negative electrode plate 2 and the negative strap 8. The second is that the negative electrode grid 2a comprises a lead-calcium-tin alloy containing tin in an amount of 0.45 mass% or less.

Providing the bismuth-containing boundary layer 9 at the boundary between the current collecting tab (ear) 2c of the negative electrode plate 2 and the negative strap 8 can prevent the disconnection due to corrosion of the boundary, as taught by Patent Literature 1. The inventors have newly found that the presence of the boundary layer 9, however, causes another problem, that is, a reduction in charge acceptance. The inventors have presumed that this problem occurs through the following mechanism. Due to the presence of bismuth in the boundary layer 9, the potential of the negative electrode grid 2a itself shifts in the noble direction, leading to a sharp decrease in hydrogen overvoltage. This facilitates the hydrolysis of electrolyte in the late stage of charging, as a result of which the water content in the electrolyte is extremely lowered, with the sulfate ion left in excess. Thus, the mobility of the electrolyte is reduced.

The inventors have conceived of shifting the initial potential of the negative electrode grid 2a in the base direction, thereby to offset the influence of the potential shift due to the boundary layer 9 in the noble direction. The inventors have conducted intensive studies and found that the offset can be effectively and smoothly achieved by using a lead-calcium-tin alloy containing tin in an amount of 0.45 mass% or less for the negative electrode grid 2a.

When the amount of tin contained in the lead-calcium-tin alloy used for the negative electrode grid 2a exceeds 0.45 mass%, the potential of the negative electrode grid 2a itself extremelyshifts in the noble direction. This, in synergy with the effect of bismuth in the boundary layer 9, will excessively facilitate thehydrolysis in the late stage of charging. As a result, the mobility of the electrolyte is reduced, failing to improve the charge acceptance. On the other hand, when the amount of tin is reduced to or below the detection limit, the mechanical strength of the negative electrode grid 2a is reduced. This leads to deterioration in productivity. For example, when the negative electrode grid 2a is an expanded grid, the grid bone is prone to fracture in expanding process. Whatever the form of the negative electrode grid 2a is, the grid bone easily deforms when the negative electrode active material 2b is applied to the negative electrode grid 2a.

The recent trend shows that cars equipped with idling stop system (ISS)are more and more widely used. A lead acid battery to be mounted in a car equipped with ISS is supposed to be deeply discharged to a relatively low SOC (State Of Charge) region, and therefore, required to have durability against repeated deep discharge. In addition, among the cars equipped with ISS, a considerable number of them have been carrying out the control by generating a regenerative current at the time of braking and the like and charging the lead acid battery with the regenerative current. In order to achieve more efficient charging with the regenerated current, it is desirable to keep the SOC of the lead acid battery relatively low (so as not to be fully charged). In other words, it is all the more necessary for the lead acid battery mounted in the car equipped with ISS to have improved charge acceptance, which can be achieved by shifting the potential of the negative electrode grid 2a in the base direction to an appropriate extent.

To enhance the advantageous effects of the present invention, the boundary layer 9 comprises a lead-bismuth alloy, and contains bismuth in an amount of 25 mass% or more and 50 mass% or less. When the boundary layer 9 comprising a lead-bismuth alloy contains bismuth in an amount of below 25 mass%, the melting point of the layer exceeds 250°C and reaches near 330°C which is the melting point of the negative electrode grid 2a(lead-calcium-tin alloy). In this case, it becomes rather difficult for the boundary layer 9 to exert an effect similar to solder, and the advantage of providing the boundary layer 9, i.e., the prevention of disconnection due to corrosion, is somewhat reduced. On the other hand, when the amount of bismuth in the boundary layer 9 is above50 mass%, the potential of the negative electrode grid 2a shifts, only slightly, in the noble direction, causing the hydrolysis to proceed in the late stage of charging. As a result, the mobility of the electrolyte is somewhat reduced, making the improvement in charge acceptance less noticeable.

Next, a description is given of how to analyze the lead acid battery to determine the amount of bismuth in the boundary layer 9. Firstly, in the case where the boundary layer 9is attached (or applied) to the current collecting tab (ear) 2c of the negative electrode plate 2, since the boundary layer 9 is provided in excess beyond the portion abutting the negative strap 8, the amount of bismuth in the boundary layer 9 can be determined by analyzing the portion provided in excess in the boundary layer 9, avoiding the portion where the bismuth has been spread during the welding with the negative strap 8. Secondly, in the case where the negative strap 8 and the boundary layer 9 have the same composition (i.e., the boundary layer 9 is a part of the negative strap 8 abutting the current collecting tab (ear)), the amount of bismuth in the boundary layer 9 can be determined by analyzing the negative strap 8 itself.

The lead acid battery to be mounted in the car equipped with ISS is required to have excellent charge acceptance (quick recovery ofSOC) as discussed above. In such a case, allowing the electrolyte to include aluminum in the electrolyte at a concentration of 0.02 mol/L or more can realize the excellent charge acceptance. On the other hand, including aluminum in excess makes the charge acceptance insufficient. The upper limit of the aluminum concentration in the electrolyte is preferably 0.2 mol/L.

The advantageous effects of the present invention will now be described below by way of Examples.

### (1) Fabrication of lead acid battery

A D26L-size lead acid battery specified in JISD5301 was fabricated in the present Examples. Cell chambers 5a each accommodate seven positive electrode plates 1 and eight negative electrode plates 2, with the negative electrode plates 2 each placed inside a bag-shaped separator 3 made of polyethylene.

The positive electrode plate 1 was obtained by kneading a lead oxide powder with sulfuric acid and purified water, to prepare a precursor paste of a positive electrode active material 1b, and filling the paste into a positive electrode grid 1a (expanded grid) made of a lead alloy sheet containing calcium.

The negative electrode plate 2 was obtained by adding carbon and an organic additive to a lead oxide powder, and kneading the powder with sulfuric acid and purified water, to prepare a precursor paste of a negative electrode active material 2b, and filling the paste into a negative electrode grid 2a (expanded grid) made of a lead alloy sheet having a composition as shown in Table 1.

The obtained positive and negative electrode plates 1 and 2 were aged and dried. Afterwards, the negative electrode plates 2 were each placed inside the bag-shaped separator 3 made of polyethylene, and stacked with the positive electrode plates 2 alternately, to obtain an electrode plate group 4 comprising seven positive electrode plates 1 and eight negative electrode plates 2 stacked alternately one on another with the separator 3 therebetween. The electrode plate group 4 was placed in each of six cell chambers 5a divided by a partition. Thereafter, current collecting tabs (ears) 1c of the positive electrode plates 1 were collectively integrated with a positive strap 7 made of a leadantimony alloy for each electrode plate group 4, and current collecting tabs (ears) 2c of the negative electrode plates 2 were collectively integrated with a negative strap 8 made of a lead-tin alloy for each electrode plate group 4. The positive strap 7 and the negative strap 8 in the cell chambers 5a adjacent to each other were connected in series. Onto the lead alloy sheet before subjecting to expanding, a foil was attached so that the current collecting tabs (ears) 2c of the negative electrode plates 2 were each provided with a boundary layer 9 as shown in Table 1.

Subsequently, a dilute sulfuric acid whose density at injection was 1.20 g/cm³ was injected to perform chemical formation, and through subsequent adjustment, a lead acid battery having a final electrolyte density after chemical formation of 1.28 g/cm³was obtained. The concentration of aluminum ion in the electrolyte after chemical formation was adjusted as appropriate to the values shown in Table 1.

### (2) Charge acceptance

Batteries of Examples and Comparative Examples were each subjected to a charge acceptance test specified in JISD5301. Specifically, the battery was discharged at as-hour rate for 2.5 hours in a 25°C environment, and after left to stand for 12 hours or more in a 0°C environment, subjected to a constant voltage charging at 14.4 V(maximum current: 100 A) for 10 minutes in a 0°C environment. The charge current value at the 10^{th} minute is shown in Table 1 as an index of the charge acceptance.

### (3) Productivity of negative electrode grid 2a

The productivity was evaluated by the occurrence rate of grid bone fracture that occurred when lead alloy sheets having different compositions as shown in Table 1 were worked into the negative electrode grids 2a by the reciprocal expanding method of pressing the sheet with the die moving up and down. Specifically, during the production of the negative electrode plate 2, if the grid bone forming the network of the negative electrode grid 2a fractured at at least one point (electrical connection was broken), it was regarded as a defective, and the number of defectives in 10,000 negative electrode plates 2 produced was calculated as a percentage. The percentage is shown in Table 1 as an index of the productivity (the smaller the percentage is, the better the productivity is).

### (4) Tolerance to electrical disconnection due to corrosion

The liquid level of electrolyte was set 5 mm below the bottom of the negative strap 8, thereby to expose the negative strap 8 from the electrolyte. In this state, the battery was subjected to a constant voltage charging at a charge voltage of 14.5 V (maximum current: 25 A) for 200 hours in a 70°C environment under the conditions of, as the vibration simulating actual car running, "vibration direction: vertical", "acceleration: 1 G", and "sweep frequency:10Hz to 33Hz". Thereafter, the battery was disassembled to visually inspect the condition of the negative strap 8. In Table 1, the battery in which no abnormality was observed in the negative strap 8 is denoted as "Excellent", the battery in which a trace of corrosion was observed in the negative strap 8 is denoted as "Good", the battery in which corrosion was underway in both the negative strap 8 and the current collecting tabs (ears) 2c of the negative electrode plates 2 is denoted as "Poor", and the battery in which corrosion had proceeded to break the connection between the negative strap and the negative electrode plate is denoted as "Bad".

**[Table 1]**

| Batte -ry No. | Negative electrode grid | Boundary layer | Al ion in electrolyte (mol/L) | Charge acceptance (A) | Productivity of negative electrode grid | Disconnection due to corrosion |
|---|---|---|---|---|---|---|
| A-1 | Pb-0.07mass%Ca alloy | Pb-38mass%Bi alloy | 0.1 | 11.8 | 2.70 | Excellent |
| A-2 | Pb-0.07mass%Ca-0.05mass%Sn alloy | Pb-38mass%Bi alloy | 0.1 | 12.0 | 1.5% | Excellent |
| A-3 | Pb-0.07mass%Ca-0.15rrass%Sn alloy | Pb-38mass%Bi alloy | 0.1 | 12.2 | 0.80 | Excellent |
| A-4 | Pb-0.07mass%Ca-0.25mass%Sn alloy | Pb-38mass%Bi alloy | 0.1 | 12.5 | 0.02% | Excellent |
| A-5 | Pb-0.07mass%Ca-0.35mass%Sn alloy | Pb-38mass%Bi alloy | 0.1 | 9.8 | 0.03% | Excellent |
| A-6 | Pb-0.07mass%Ca-0.45mass%Sn alloy | Pb-38mass%Bi alloy | 0.1 | 9.2 | 0.01% | Excellent |
| A-7 | Pb-0.07mass%Ca-0.4 9rrass%Sn alloy | Pb-38mass%Bi alloy | 0.1 | 8.3 | 0.01% | Excellent |
| B-1 | Pb-0.07mass%Ca-0.25mass%Sn alloy | Pb-53mass%Sn alloy | 0.1 | 12.7 | 0.02% | Bad |
| B-2 | Pb-0.07mass%Ca-0.25mass%Sn alloy | Pb-23mass%Bi alloy | 0.1 | 12.3 | 0.03% | Poor |
| B-3 | Pb-0.07mass%Ca-0.25mass%Sn alloy | Pb-25mass%Bi alloy | 0.1 | 12.5 | 0.02% | Good |
| B-4 | Pb-0.07mass%Ca-0.25mass%Sn alloy | Pb-30mass%Bi alloy | 0.1 | 12.4 | 0.02% | Excellent |
| B-5 | Pb-0.07mass%Ca-0.25mass%Sn alloy | Pb-38mass%Bi alloy | 0.1 | 12.5 | 0.01% | Excellent |
| B-6 | Pb-0.07mass%Ca-0.25mass%Sn alloy | Pb-45mass%Bi alloy | 0.1 | 12.8 | 0.01% | Excellent |
| B-7 | Pb-0.07mass%Ca-0.25mass%Sn alloy | Pb-50mass%Bi alloy | 0.1 | 9.8 | 0.02% | Excellent |
| B-8 | Pb-0.07mass%Ca-0.25mass%Sn alloy | Pb-53mass%Bi alloy | 0.1 | 9.3 | 0.01% | Excellent |
| C-1 | Pb-0.07mass%Ca-0.25mass%Sn alloy | Pb-38mass%Bi alloy | 0.015 | 9.0 | 0.01% | Excellent |
| C-2 | Pb-0.07mass%Ca-0.25mass%Sn alloy | Pb-38mass%Bi alloy | 0.02 | 9.9 | 0.02% | Excellent |
| C-3 | Pb-0.07mass%Ca-0.25mass%Sn alloy | Pb-38mass%Bi alloy | 0.05 | 11.2 | 0.01% | Excellent |
| C-4 | Pb-0.07mass%Ca-0.25mass%Sn alloy | Pb-38mass%Bi alloy | 0.1 | 12.5 | 0.01% | Excellent |
| C-5 | Pb-0.07mass%Ca-0.25mass%Sn alloy | Pb-38mass%Bi alloy | 0.15 | 13.0 | 0.02% | Excellent |
| C-6 | Pb-0.07rnass %Ca-0.25massSn alloy | Pb-38mass%Bi alloy | 0.2 | 9.8 | 0.03% | Excellent |
| C-7 | Pb-0.07mass%Ca-0.25mass%Sn alloy | Pb-38mass%Bi alloy | 0.22 | 9.4 | 0.01% | Excellent |

Comparison is made to Batteries A-1 to A-7. In Battery A-1 in which the amount of tin in the negative electrode grid 2a was zero (assuming below the detection limit), the productivity of the negative electrode grid 2a was significantly deteriorated; whereas, in Battery A-7 in which the amount of tin in the negative electrode grid 2a was above 0.45 mass%, the charge acceptance was extremely lowered. This indicates that the negative electrode grid 2a desirably contains 0.45 mass% or less of tin. Preferably, the amount of tin in the negative electrode grid 2a is 0.15 mass% or more and 0.35 mass% or less.

Comparison is made to Batteries B-1 to B-8. In Battery B-1 in which the boundary layer 9 was formed of a lead-tin alloy containing no bismuth, the disconnection due to corrosion was severe; whereas Battery B-8 in which the amount of bismuth in the boundary layer 9 exceeded 50 mass%, the charge acceptance was somewhat lowered. This indicates that the boundary layer 9 desirably contains bismuth, and when the boundary layer 9 is formed of a lead-bismuth alloy, the amount of bismuth therein is 25 mass% or more and 50 mass% or less.

Comparison is made to Batteries C-1 to C-7. In both Battery C-1 in which the aluminum ion concentration in the electrolyte was below 0.02 mol/L and Battery C-7 in which the aluminum ion concentration was above 0.2 mol/L, the charge acceptance was somewhat lowered. This indicates that the aluminum ion concentration in the electrolyte is preferably 0.02 mol/L or more and 0.2 mol/L or less.

Although the present invention is described above by way of preferable embodiments, such description should not be construed as limiting the invention, and various variations are possible. For example, although the boundary layer 9 was attached to the current collecting tab (ear) 2c of the negative electrode plate 2in Examples, the negative strap 8 itself can be made to have the same composition as the boundary layer 9 (i.e., the boundary layer 9 substantially constitutes a portion of the negative strap 8 abutting the current collecting tab (ear) 2c), with a similar tendency to the present Examples.

### [Industrial Applicability]

The present invention can be usefully applied to the lead acid battery used in the car equipped with idling stop system.

### [Reference Signs List]

1: positive electrode plate
1a: positive electrode grid
1b: positive electrode active material
2: negative electrode plate
2a: negative electrode grid
2b: negative electrode active material
1c, 2c: current collecting tab (ear)
3: separator
4: electrode plate group
5: battery container
5a: cell chamber
6: cover
7: positive strap
8: negative strap
9: boundary layer

## Claims

1. A lead acid battery, comprising:
positive electrode plates each including a positive electrode grid and a positive electrode active material, and
negative electrode plates each including a negative electrode grid and a negative electrode active material,
the positive electrode plates and the negative electrode plates being stacked alternately with a separator between the positive electrode plate and the negative electrode plate to form an electrode plate group;
a positive strap integrated with current collecting tabs of the positive electrode plates collectively for each electrode plate group, and a negative strap integrated with current collecting tabs of the negative electrode plates collectively for each electrode plate group;
a battery container having a plurality of cell chambers each containing the electrode plate group and an electrolyte; and
a cover sealing an opening of the battery container, wherein
a boundary layer containing bismuth is provided at a boundary between the current collecting tab of the negative electrode plate and the negative strap, and
the negative electrode grid comprises a lead-calcium-tin alloy containing tin in an amount of 0.45 mass% or less wherein the boundary layer contains bismuth in an amount of 25 mass% or more and 50 mass% or less.

2. The lead acid battery of claim 1, wherein the boundary layer comprises a lead-bismuth alloy.

3. The lead acid battery of claim 1, wherein the electrolyte contains aluminum ion at a concentration of 0.02 mol/L or more and 0.2 mol/L or less.

## Patentansprüche

1. Bleiakkumulator, umfassend:
Positivelektrodenplatten, jeweils umfassend ein Positivelektrodengitter und ein Positivelektrodenaktivmaterial, und
Negativelektrodenplatten, jeweils umfassend ein Negativelektrodengitter und ein Negativelektrodenaktivmaterial,
wobei die Positivelektrodenplatten und die Negativelektrodenplatten mit einem Separator zwischen der Positivelektrodenplatte und der Negativelektrodenplatte abwechselnd gestapelt sind, um eine Elektrodenplattengruppe zu bilden;
einen positiven Riemen, integriert mit Stromabnehmerlaschen der Positivelektrodenplatten gemeinsam für jede Elektrodenplattengruppe und einen negativen Riemen, integriert mit Stromabnehmerlaschen der Negativelektrodenplatten gemeinsam für jede Elektrodenplattengruppe;
einen Batteriebehälter mit einer Mehrzahl von Zellenkammern, die jeweils die Elektrodenplattengruppe und einen Elektrolyten enthalten; und
eine Abdeckung, die eine Öffnung des Batteriebehälters verschließt,
wobei
eine Bismut enthaltende Grenzschicht an einer Grenze zwischen der Stromabnehmerlasche der Negativelektrodenplatte und der negativen Brücke bereitgestellt ist, und
das Negativelektrodengitter eine Blei-Calcium-ZinnLegierung, die Zinn in einer Menge von 0,45 Masse-% oder weniger enthält, umfasst,
wobei die Grenzschicht Bismut in einer Menge von 25 Masse-% oder mehr und 50 Masse-% oder weniger enthält.

2. Bleiakkumulator nach Anspruch 1, wobei die Grenzschicht eine Blei-Bismut-Legierung umfasst.

3. Bleiakkumulator nach Anspruch 1, wobei der Elektrolyt Aluminium-Ionen in einer Konzentration von 0,02 mol/l oder mehr und 0,2 mol/l oder weniger enthält.

## Revendications

1. Batterie plomb acide, comprenant :
des plaques d'électrode positive chacune comprenant une grille d'électrode positive et un matériau actif d'électrode positive et
des plaques d'électrode négative chacune comprenant une grille d'électrode négative et un matériau actif d'électrode négative,
les plaques d'électrode positives et les plaques d'électrode négative étant empilées en alternance avec un séparateur entre la plaque d'électrode positive et la plaque d'électrode négative pour former un groupe de plaques d'électrode ;
une courroie positive intégrée avec des attaches de collecte de courant des plaques d'électrode positive collectivement pour chaque groupe de plaques d'électrode, et une courroie négative intégrée avec des attaches de collecte de courant des plaques d'électrode négative collectivement pour chaque groupe de plaques d'électrode ;
un récipient de batterie ayant une pluralité de chambres cellulaires chacune contenant le groupe de plaques d'électrode et un électrolyte ; et
un couvercle scellant une ouverture du récipient de batterie,
une couche limite contenant du bismuth étant fournie à une limite entre l'attache de collecte de courant de la plaque d'électrode négative et la courroie négative et
la grille d'électrode négative comprenant un alliage de plomb-calcium-étain contenant de l'étain en une quantité de 0,45 % en masse ou moins la couche limite contenant du bismuth en une quantité de 25 % en masse ou plus et de 50 % en masse ou moins.

2. Batterie plomb acide selon la revendication 1, dans laquelle la couche limite comprend un alliage plomb-bismuth.

3. Batterie plomb acide selon la revendication 1, dans laquelle l'électrolyte contient des ions aluminium à une concentration de 0,02 mole/L ou plus et 0,2 mo/L ou moins.
